Europäisches Patentamt

European Patent Office

Office européen des brevets

(11) Numéro de publication : **0 458 947 B1**

(12) # FASCICULE DE BREVET EUROPEEN

(45) Date de publication du fascicule du brevet :
26.01.94 Bulletin 94/04

(51) Int. Cl.⁵ : **G01V 1/20,** G01V 1/40

(21) Numéro de dépôt : **91901519.8**

(22) Date de dépôt : **19.12.90**

(86) Numéro de dépôt international :
**PCT/FR90/00928**

(87) Numéro de publication internationale :
**WO 91/09328 27.06.91 Gazette 91/14**

(54) **PROCEDE ET DIPSOSITIF D'ACQUISITION DE DONNEES SISMIQUES DE PUITS SELON DEUX DIRECTIONS OPPOSEES.**

(30) Priorité : **19.12.89 FR 8916804**

(43) Date de publication de la demande :
**04.12.91 Bulletin 91/49**

(45) Mention de la délivrance du brevet :
**26.01.94 Bulletin 94/04**

(84) Etats contractants désignés :
**FR GB IT**

(56) Documents cités :
**US-A- 3 976 969
US-A- 4 173 748
US-A- 4 794 573
US-A- 4 833 658**

(73) Titulaire : **COMPAGNIE GENERALE DE GEOPHYSIQUE
1, Rue Léon Migaux
F-91341 Massy Cédex (FR)**

(72) Inventeur : **FORTIN, Jean-Pierre
79, rue Daguerre
F-75014 Paris (FR)**

(74) Mandataire : **Martin, Jean-Jacques et al
Cabinet REGIMBEAU 26, Avenue Kléber
F-75116 Paris (FR)**

EP 0 458 947 B1

Jouve, 18, rue Saint-Denis, 75001 PARIS

## Description

La présente invention est relative à un procédé et à un système d'acquisition de données sismiques de puits selon deux directions opposées.

Dans les puits d'acquisition de données sismiques ou autres, des ondes de pression engendrées à partir d'une source peuvent permettre d'acquérir des informations relatives aux couches géologiques environnantes.

On a cherché à étudier les couches géologiques environnantes de puits de forage à partir de l'étude de la réflexion et de la réfraction d'ondes de pression engendrées dans le puits, les phénomènes de réflexion et de réfraction précités intervenant sur les couches géologiques environnant le puits de forage précité.

Ces techniques sont susceptibles de présenter un intérêt majeur dans le cas où le puits de forage est sensiblement parallèle aux couches géologiques environnantes. Dans ce cas, le puits peut alors permettre d'effectuer une étude des couches géologiques précitées selon deux directions opposées, contenues dans un plan longitudinal de symétrie du puits de forage.

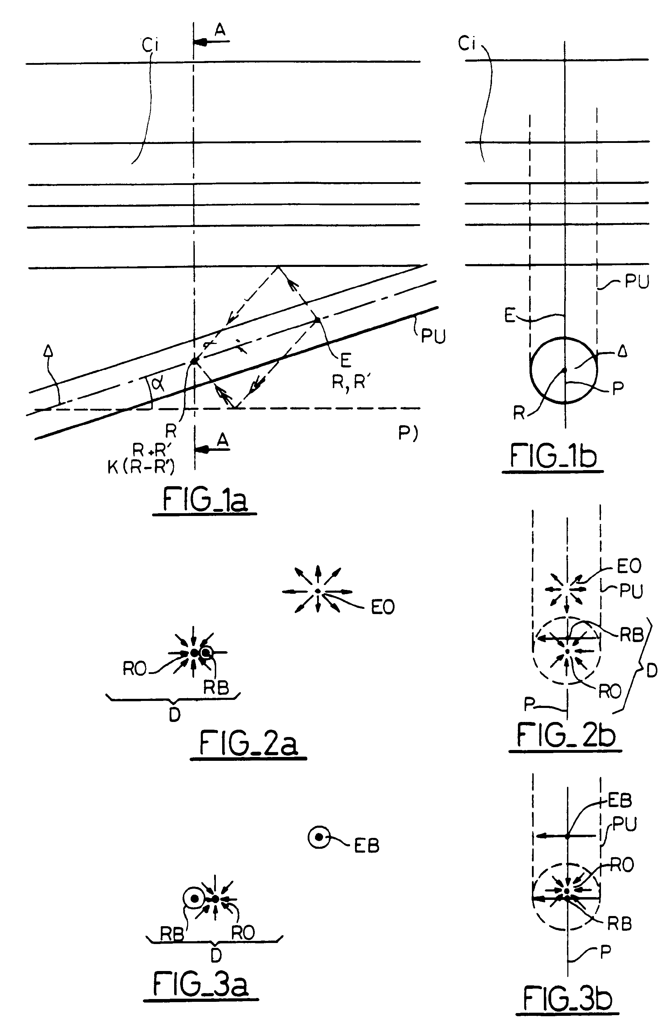

Cependant, les méthodes d'étude précitées se heurtent à la difficulté de discrimination d'échos ou ondes de pression réfléchies, selon les deux directions opposées lorsque les vitesses apparentes de ces échos sont identiques ou très proches, ainsi que représenté en figures 1a, 1b, par les itinéraires d'échos fléchés lorsque l'angle $\alpha$ est nul ou très proche de zéro. La vitesse apparente de deux échos provenant de deux directions opposées est définie comme inversement proportionnelle au temps de propagation entre la source d'émission de l'onde de pression et un récepteur décalé en distance dans le puits de forage par rapport à la source pour une réflexion correspondante en un point extérieur au puits.

Dans le cas où les vitesses apparentes des échos relatifs à deux points réflecteurs situés de part et d'autre de l'axe du puits sont identiques, ainsi que représenté en figure la, la discrimination des échos correspondants reçus d'après les vitesses apparentes n'est plus possible.

On connaît déjà, par le document US-A-4 833 658, un procédé d'acquisition de données sismiques de puits, selon deux directions opposées, dans un puits de forage parallèle ou pseudo-parallèle aux couches géologiques environnantes. Ce document ne précise aucune méthode permettant la discrimination des ondes réfléchies et des ondes réfractées.

On connaît par ailleurs, par le document US-A-4 794 573, un procédé pour discriminer des ondes de pression réfléchies et réfractées, dans lequel on calcule la somme et la différence de signaux d'échos. Ces signaux d'échos sont relevés en deux points de réception décalés verticalement.

La présente invention a pour but de remédier à l'inconvénient ci-dessus exposé par la mise en oeuvre d'un procédé et d'un dispositif d'acquisition de données sismiques de puits, selon deux directions opposées, dans lesquels l'ambiguité due à l'identité des vitesses apparentes est levée.

Un autre but de la présente invention est la mise en oeuvre d'un procédé et d'un dispositif permettant, dans le cas où le puits de forage est parallèle ou pseudo-parallèle aux couches géologiques environnantes, de déterminer les différents horizons selon deux directions opposées, symétriques à l'axe longitudinal du puits.

Ainsi, un objet de l'invention est un procédé d'acquisition de données sismiques de puits, selon deux directions opposées, dans un puits de forage parallèle ou pseudo-parallèle aux couches géologiques environnantes, ledit procédé consistant :

. à effectuer dans ledit puits, en un point de celui-ci, l'émission (E) d'une onde de pression (R, R'),

. à effectuer en un point de détection dudit puits, décalé par rapport au point d'émission (E) de l'onde de pression, une détection des échos réfléchis et réfractés par les formations géologiques adjacentes, caractérisé en ce que l'onde de pression émise est omnidirectionnelle et/ou bidirectionnelle et en ce que la détection est effectuée à partir d'au moins une réception bidirectionnelle et/ou omnidirectionnelle de façon à discriminer les ondes de pression réfléchies et réfractées par lesdites formations géologiques dans un plan de symétrie longitudinale dudit puits, ladite discrimination étant effectuée à partir d'une détection de la somme (R+R') et d'une fonction de la différence k(R-R') des signaux d'échos provenant desdites directions opposées. reçus audit point de détection.

Le dispositif d'acquisition de données de sismique de puits, selon deux directions opposées dans un puits parallèle ou pseudo-parallèle aux courbes géologiques environnantes, est remarquable en ce qu'il comprend un outil d'acquisition comportant des moyens d'émission d'une onde de pression omnidirectionnelle et/ou bidirectionnelle et des moyens de détection bidirectionnelle des échos réfléchis et réfractés par les formations géologiques adjacentes, disposés en décalage par rapport aux moyens d'émission, de façon à discriminer les ondes de pression réfléchies et réfractées par lesdites formations géologiques dans un plan de symétrie longitudinale du puits. La discrimination est effectuée à partir d'une détection de la somme et de la différence des signaux d'écho provenant des directions opposées.

Le procédé et le dispositif, objets de l'invention, sont particulièrement adaptés à l'acquisition de données sismiques de puits au cours de compagnes de prospection géophysique.

2

L'invention sera mieux comprise à la lecture de la description et à l'observation des dessins dans lesquels :

. la figure 1a représente une vue en coupe suivant un plan de symétrie P longitudinal du puits de forage PU, ce plan de symétrie correspondant pour la figure la au plan de la feuille, un schéma illustratif de la mise en oeuvre du procédé selon l'invention,

. la figure 1b représente une vue en coupe de la figure la selon le plan de coupe AA, le plan P de symétrie longitudinal du puits PU étant représenté par un trait continu,

. les figures 2a et 2b représentent de manière illustrative un premier mode de mise en oeuvre du procédé, objet de l'invention, selon les vues des figures 1a et 1b, respectivement,

. les figures 3a et 3b représentent de manière illustrative un deuxième mode de mise en oeuvre du procédé, objet de l'invention, selon les vues des figures 1a et 1b, respectivement,

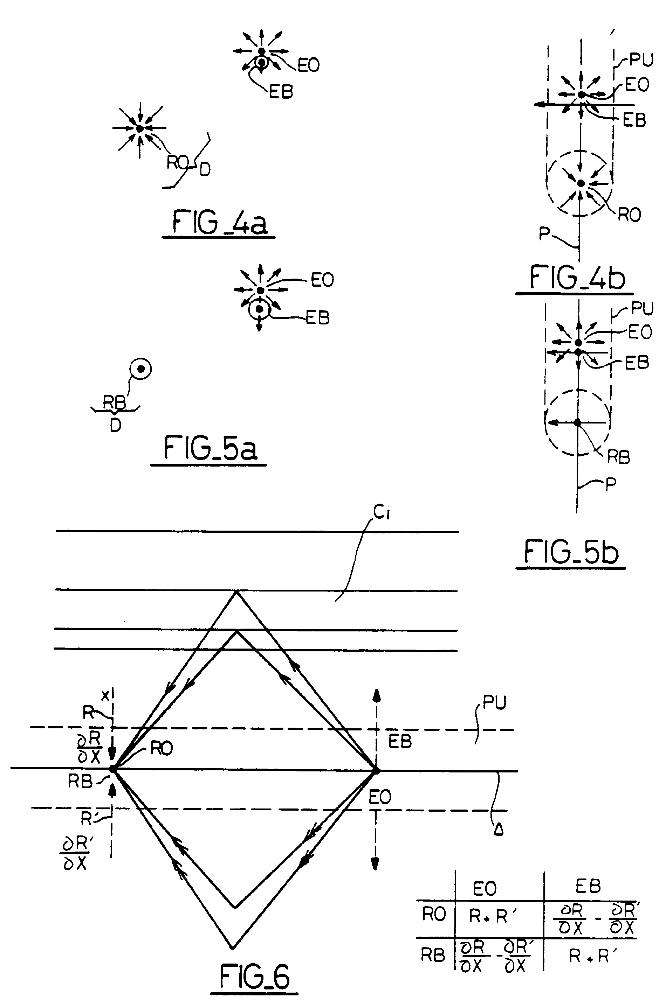

. les figures 4a et 4b représentent de manière illustrative un troisième mode de mise en oeuvre du procédé, objet de l'invention selon les vues des figures 1a et 1b, respectivement,

. les figures 5a et 5b représentent de manière illustrative un quatrième mode de mise en oeuvre du procédé, objet de l'invention, selon les vues des figures 1a et 1b, respectivement,

. la figure 6 représente, de manière analogue à la figure la, un schéma illustratif, récapitulatif particulier de mise en oeuvre du procédé, selon l'invention, dans le cas où la différence des signaux d'échos provenant des directions opposées est obtenue par l'intermédiaire de la dérivée des signaux d'échos provenant des directions opposées et dont la somme est détectée,

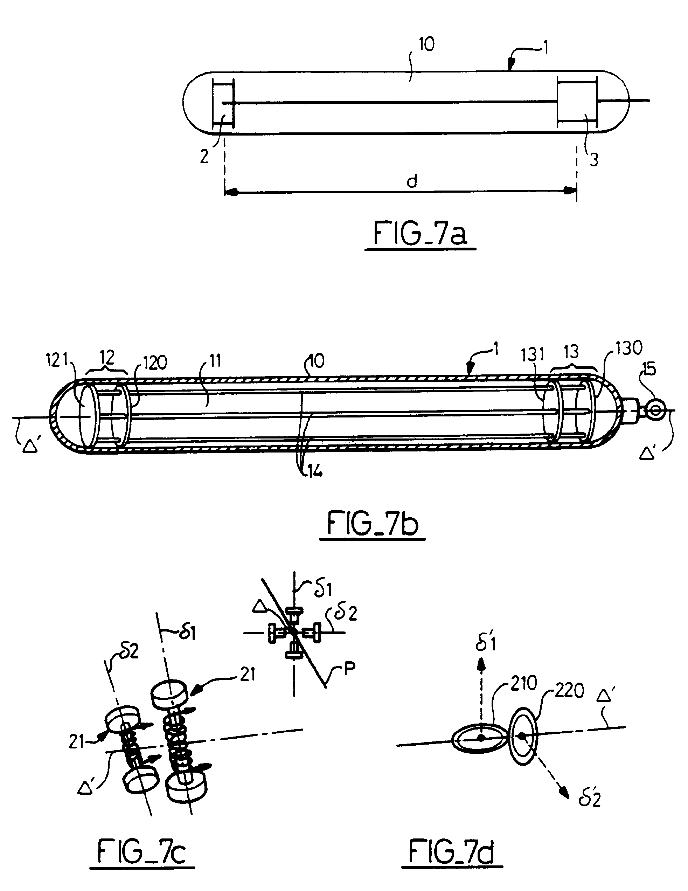

. la figure 7a représente une vue schématique d'un outil permettant avantageusement la mise en oeuvre du procédé, objet de l'invention,

. la figure 7b représente, en coupe partielle, une vue plus détaillée d'un mode de réalisation de l'outil représenté en figure 7a,

. la figure 7c et la figure 7d représentent des modes de réalisation avantageux de récepteurs bidirectionnels permettant une mise en oeuvre particulièrement adaptée de l'outil et du dispositif selon l'invention, tel que représenté en figure 7b,

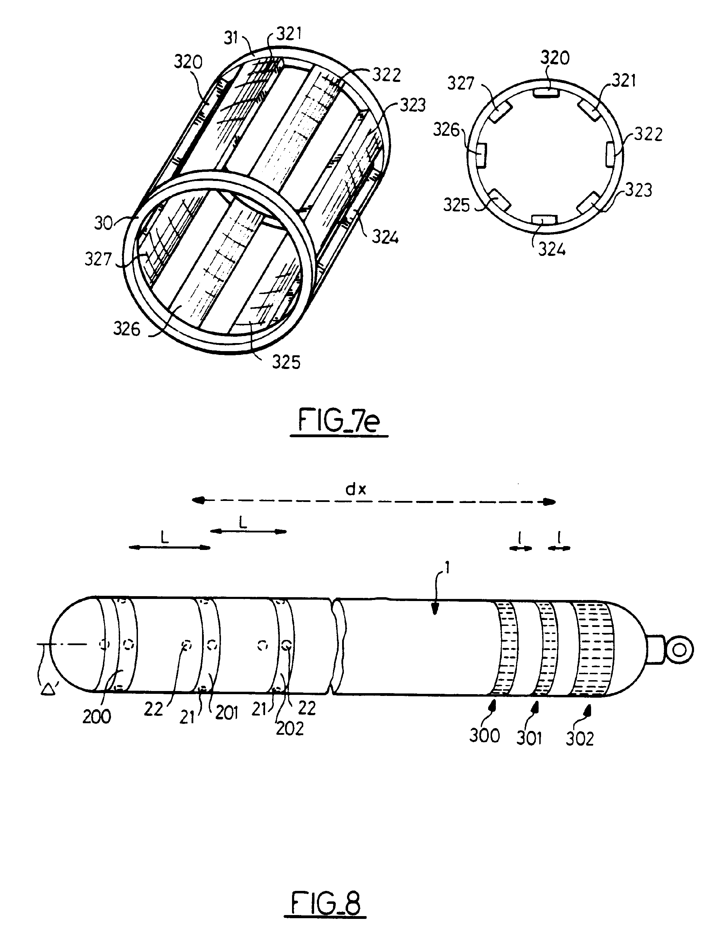

. la figure 7e représente un mode de réalisation avantageux non limitatif d'une source omnidirectionnelle et/ou bidirectionnelle susceptible d'être avantageusement utilisée pour la mise en oeuvre de l'outil et du dispositif, tel que représenté en figure 7a ou 7b,

. la figure 8 représente une variante avantageuse de réalisation de l'outil représenté en figure 7a ou 7b et dans laquelle un décalage ajustable et programmable entre source d'émission de l'onde de pression et récepteur de détection bidirectionnelle peut être obtenu.

Le procédé d'acquisition de données sismiques de puits selon deux directions opposées, objet de l'invention, sera tout d'abord décrit en liaison avec les figures 1a et 1b.

Sur la figure 1a, on a représenté selon un plan de coupe longitudinal du puits de forage PU un mode de réalisation non limitatif du procédé objet de l'invention.

Ainsi que représenté sur la figure précitée, le procédé consiste à effectuer dans le puits PU l'émission d'une onde de pression et en un point du puits décalé par rapport au point d'émission de l'onde de pression une détection des échos réfléchis et réfractés par les formations géologiques adjacentes de façon à discriminer les ondes de pression réfléchies et réfractées par les formations géologiques dans un plan de symétrie longitudinale du puits.

Sur la figure 1a et la figure 1b, les formations géologiques représentées par des couches sont notées Ci. L'émission de l'onde de pression est effectuée, ainsi que représenté sur les figures 1a et 1b, au point E situé sur l'axe longitudinal du puits $\Delta$, la réception de ces ondes ou des échos réfléchis étant effectuée en un point R de l'axe $\Delta$ précité, les échos réfléchis et réfractés provenant au point R précité selon deux directions opposées situées de part et d'autre de l'axe longitudinal $\Delta$ du puits PU.

Selon une caractéristique avantageuse du procédé objet de l'invention, la discrimination des ondes de pression réfléchies et réfractées par les formations géologiques, c'est-à-dire finalement la discrimination des échos R et R', est effectuée à partir d'une détection de la somme R+R' et d'une fonction de la différence k(R-R') des signaux d'échos provenant des directions opposées précitées.

Sur la figure la et de façon non limitative, la fonction de la différence des signaux d'échos R et R' est notée k(R-R'), le coefficient k pouvant être soit un opérateur linéaire, soit un opérateur représentant le gradient des ondes de pression ou d'échos réfléchis R et R' selon la direction orthogonale à l'axe longitudinal $\Delta$ du puits après composition.

On comprendra, bien entendu, que suite à l'obtention par la détection de la somme et de la différence des signaux d'échos, la discrimination précitée peut être ensuite effectuée par résolution et composition des signaux reçus par exemple.

Sur la figure 1b, on a représenté en coupe selon le plan de coupe AA de la figure la une vue de la figure précitée, la section du puits PU étant représentée par un cercle en trait continu.

3

Un premier mode de mise en oeuvre du procédé, objet de l'invention, sera tout d'abord décrit en liaison avec les figures 2a et 2b.

Selon la figure 2a précitée, l'émission dans le puits PU est omnidirectionnelle. Sur la figure 2a, on a représenté le caractère omnidirectionnel de l'émission E par la désignation EO au point d'émission, celui-ci étant en outre entouré de flèches divergentes pour symboliser le caractère omnidirectionnel de l'émission. L'émission ayant le caractère omnidirectionnel précité, la détection consiste à effectuer une réception omnidirectionnelle RO sur cette même figure 2a, le caractère omnidirectionnel de la réception étant, en outre, symbolisé par l'ensemble de flèches convergentes vers le point RO représenté.

Pour mettre en oeuvre la détection D, il est, en outre, effectué une réception bidirectionnelle RB des échos ou ondes de pression réfléchies et réfractées, le caractère bidirectionnel de cette réception effectué également sensiblement au point R étant représenté sur la figure 2a par le vecteur orthogonal au plan de la figure précitée, c'est-à-dire au plan de symétrie longitudinale du puits PU.

Sur la figure 2b, on a représenté les conditions d'émission omnidirectionnelle et de réceptions omnidirectionnelle et bidirectionnelle de la figure 2a dans la situation correspondante de la figure 1b, le caractère omnidirectionnel de l'émission et de la réception étant représenté de la même façon que dans le cas de la figure 2a, le caractère bidirectionnel de la réception RB étant alors représenté par un vecteur orthogonal au plan de symétrie longitudinale du puits PU, ce plan étant noté P sur la figure 2b et représenté par un trait continu.

On comprendra, en effet, que le caractère d'émission omnidirectionnelle et de réception omnidirectionnelle permet d'engendrer respectivement les ondes de pression R et R' et de recevoir les échos pour donner naissance au signal R+R' au niveau du point de réception R, alors que la réception bidirectionnelle en ce même point RB par une réception différentielle par exemple permet d'obtenir un signal proportionnel à la différence R-R'.

Un deuxième mode de mise en oeuvre du procédé, objet de l'invention, sera maintenant décrit en liaison avec les figures 3a et 3b.

Selon les figures précitées, l'émission dans le puits est bidirectionnelle, l'émission EB sur la figure 3a par exemple est représentée par un vecteur orthogonal au plan de la figure précitée, et la détection D consiste alors à effectuer une réception omnidirectionnelle RO symbolisée par l'ensemble de flèches convergentes vers le point RO précité et une réception bidirectionnelle RB des échos ou ondes de pression réfléchies et réfractées.

On notera que la réception bidirectionnelle RB précitée est symbolisée par un vecteur orthogonal au plan de la figure 3a. De la même manière, on a représenté les conditions d'émission et de réception de la figure 3a sur la figure 3b, l'émission bidirectionnelle sur la figure 3b étant symbolisée par un vecteur orthogonal au plan de symétrie longitudinale du puits PU, ce plan étant noté P, la réception bidirectionnelle RB étant symbolisée de la même manière.

Bien entendu, la réception omnidirectionnelle RO est également symbolisée par un ensemble de flèches convergentes vers le point RO précité.

De manière analogue au cas des figures 2a et 2b, on comprendra facilement que l'émission étant dans ce cas bidirectionnelle, une réception omnidirectionnelle RO permet d'obtenir un signal proportionnel à la différence des signaux d'échos, alors que la réception bidirectionnelle RB, pour les mêmes conditions d'émission, permet, bien entendu, d'obtenir un signal proportionnel à la somme de ces mêmes signaux d'échos. La résolution du système pour l'obtention des signaux R et R', à partir des signaux somme et différence, peut être effectuée de manière semblable.

Un troisième mode de réalisation ou de mise en oeuvre du procédé, objet de l'invention, sera décrit en liaison avec les figures 4a et 4b.

Selon les figures précitées, l'émission dans le puits PU est omnidirectionnelle, cette émission étant notée EO, cette émission étant, en outre, complétée par une émission bidirectionnelle EB. Dans ce cas, la détection D consiste à effectuer simplement une réception omnidirectionnelle RO, le caractère omnidirectionnel de l'émission et de la réception étant respectivement symbolisé par un ensemble de flèches divergentes respectivement convergentes, alors que le caractère bidirectionnel de l'émission est symbolisé par un vecteur orthogonal au plan de la figure 4a représentant le plan P de symétrie longitudinale du puits PU, ce même vecteur étant représenté par un vecteur dans le plan de la figure 4b. vecteur orthogonal au plan P de symétrie longitudinale du puits.

On comprendra que dans le cas des figures 4a et 4b précitées, pour une émission omnidirectionnelle EO, la réception omnidirectionnelle RO permet d'obtenir un signal correspondant à la somme des échos R+R', alors que pour l'émission bidirectionnelle EB, la réception omnidirectionnelle RO permet d'obtenir un signal proportionnel à la différence des échos R et R'. La résolution pour l'obtention des signaux R et R' peut alors être effectuée de manière analogue, ainsi que déjà mentionné relativement aux figures 2a, 2b et 3a, 3b.

Un quatrième mode de mise en oeuvre du procédé, objet de l'invention, sera décrit en liaison avec les figures 5a et 5b.

Dans le cas des figures précitées, l'émission consiste à effectuer une émission omnidirectionnelle EO et une émission bidirectionnelle EB, la détection D consistant à effectuer une réception bidirectionnelle RB.

Sur la figure 5a, le caractère bidirectionnel de l'émission EB et de la réception RB est symbolisé par le vecteur orthogonal au plan de la figure précitée, c'est-à-dire au plan de symétrie longitudinale du puits, plan noté P. Le caractère omnidirectionnel de l'émission EO est, ainsi que précédemment, symbolisé par un ensemble de flèches divergents à partir de ce point.

Sur la figure 5b, le caractère bidirectionnel de l'émission EB et de la réception RB est représenté par les vecteurs orthogonaux au plan de symétrie longitudinale du puits P, ce plan étant représenté par un trait continu.

On comprendra, bien entendu, que dans le cas de l'émission omnidirectionnelle des figures 5a et 5b, la réception bidirectionnelle RB permet d'obtenir, à partir d'une réception de type différentiel, un signal proportionnel à la différence des échos R et R', alors que l'émission bidirectionnelle EB pour une réception bidirectionnelle RB permet d'obtenir un signal proportionnel à la somme des échos R+R'.

Un tableau et un schéma récapitulatifs de l'ensemble des modes de mise en oeuvre du procédé, objet de l'invention, seront décrits en liaison avec la figure 6.

Ce tableau récapitulatif concerne un mode de mise en oeuvre du procédé dans lequel la réception bidirectionnelle peut être effectuée à partir d'un géophone bidirectionnel de type différentiel, ce type d'appareillage permettant d'obtenir une information relative au gradient de pression $\frac{\partial R}{\partial x}$, respectivement $\frac{\partial R'}{\partial x}$, alors que la réception omnidirectionnelle peut être effectuée par exemple par un hydrophone situé sur l'axe longitudinal du puits, axe $\Delta$, cet hydrophone permettant d'obtenir, de manière connue, un signal proportionnel à la somme des échos R+R'. Le tableau représenté sur la figure 6 indique pour une émission de type omnidirectionnelle EO et une émission de type bidirectionnelle EB, la forme des signaux somme ou différence obtenue respectivement pour une réception omnidirectionnelle et bidirectionnelle RO, RB.

On comprendra, bien entendu, que la résolution des équations en R et en R', après intégration par exemple des signaux de gradient obtenus, permet d'obtenir les signaux R et R' recherchés. La discrimination sur les signaux R et R' permet ainsi de séparer les signaux provenant des deux directions opposées.

Sur la figure 6, on a représenté l'axe $\Delta$ de symétrie longitudinale du puits sensiblement horizontal. Ce cas est un cas particulier non limitatif, le puits étant par exemple parallèle ou pseudo-parallèle aux couches géologiques environnantes, lesquelles ont été notées Ci, ainsi que précédemment.

Par axe du puits parallèle ou pseudo-parallèle aux couches géologiques Ci environnantes, on entend une inclinaison relative de l'axe longitudinal du puits $\Delta$ par rapport à l'orientation moyenne des couches géologiques comprise entre 0 et 20 à 25°. Des essais effectués sur le terrain ont montré que le procédé, objet de l'invention, pouvait être mis en oeuvre pour des inclinaisons relatives, tel que précédemment mentionné.

On comprendra, bien entendu, que dans le cas où l'axe du puits est parallèle ou pseudo-parallèle aux couches géologiques environnantes, le plan de symétrie longitudinale du puits, plan P sur les figures précédentes, est sensiblement perpendiculaire aux couches géologiques adjacentes Ci.

Bien entendu, les émission ou réceptions omnidirectionnelle et bidirectionnelle, notées respectivement EO, RO et EB ou RB sont effectuées dans cet ordre ou réciproquement de manière séquentielle.

Ainsi, la détection D effectuée à partir des réceptions omnidirectionnelle RO et bidirectionnelle RB permet d'obtenir, pour une réception omnidirectionnelle RO, une émission omnidirectionnelle EO ayant été effectuée, un signal représentatif d'échos proportionnel à la somme des pressions R+R' des ondes de pression réfléchies et réfractées dans le plan de symétrie longitudinale du puits. Une réception bidirectionnelle RB dans des conditions identiques d'émission permet au contraire d'obtenir un signal représentatif de la différence des gradients de pression $\frac{\partial R}{\partial x}$ et $\frac{\partial R'}{\partial x}$ dans les directions opposées des ondes de pression réfléchies et réfractées dans le plan de symétrie P longitudinale du puits.

De façon analogue, la détection D étant effectuée à partir des réceptions omnidirectionnelle et bidirectionnelle RO, RB, une réception bidirectionnelle RB permet pour une émission bidirectionnelle EB d'obtenir un signal représentatif d'échos proportionnels à la somme des pressions R+R' des ondes de pression réfléchies et réfractées, dans le plan de symétrie longitudinale du puits. Une réception bidirectionnelle RB permet d'obtenir, pour des conditions d'émission semblables, un signal représentatif de la différence des gradients des pressions $\frac{\partial R}{\partial x}$ et $\frac{\partial R'}{\partial x}$ dans les directions opposées des ondes de pression réfléchies et réfractées dans le plan de symétrie longitudinale du puits.

On comprendra, bien entendu, que dans le cas précité l'opérateur k, affectant la différence des signaux d'échos R-R'. est l'opérateur dérivé dans la direction x et les signaux représentant la différence des gradients de pression dans la direction considérée.

Le tableau des signaux obtenus pour une émission omnidirectionnelle EO et respectivement bidirectionnelle EB et une réception omnidirectionnelle RO et une réception bidirectionnelle RB est donné ci-après :

| | EO | EB |
|---|---|---|
| RO | $R+R'$ | $\dfrac{\partial R - \partial R'}{\partial x \quad \partial x}$ |
| RB | $\dfrac{\partial R - \partial R'}{\partial x \quad \partial x}$ | $R+R'$ |

Une description plus détaillée d'un dispositif d'acquisition de données sismiques de puits selon deux directions opposées dans un puits de forage sera donnée en liaison avec les figures 7a et 7b.

Selon la figure 7a, le dispositif d'acquisition de données sismiques selon deux directions opposées dans un puits parallèle ou pseudo-parallèle aux couches géologiques environnantes, objet de la présente invention, comprend un outil d'acquisition 1 comportant des moyens d'émission 3 d'une onde de pression omnidirectionnelle et/ou bidirectionnelle. L'outil 1 comporte en outre des moyens de détection bidirectionnelle D, ces moyens étant notés 2 et permettant la détection des échos réfléchis et réfractés par les formations géologiques adjacentes de façon à discriminer les ondes de pression réfléchies et réfractées par les formations géologiques dans un plan de symétrie longitudinale du puits PU. La discrimination est effectuée à partir d'une détection de la somme et de la différence des signaux d'échos provenant des directions opposées, ainsi que décrit, pour la mise en oeuvre du procédé.

Selon une caractéristique avantageuse du dispositif, objet de l'invention, les moyens d'émission peuvent être constitués par une source impulsive telle qu'un générateur de vibrations piézoélectriques ou un générateur magnétostrictif ou même un générateur à étincelles.

En outre, les moyens d'émission peuvent être constitués par une source générateur de vibrations, ainsi qu'il sera décrit plus en détail ci-après dans la description.

Sur la figure 7a, on a représenté les moyens d'émission 3 séparés des moyens de réception 2 d'une distance de décalage d, cette distance de décalage permettant d'assurer la réception des échos, ainsi que décrit précédemment dans la description.

Selon un mode de réalisation non limitatif, les moyens 2 de détection bidirectionnelle comportent, d'une part, un hydrophone disposé dans le milieu ambiant du puits constitué par de la boue par exemple.

De préférence, selon un mode de réalisation non limitatif, tel que représenté en figure 7b, l'outil est constitué par une enveloppe 10 constituée par une gaine plastique étanche par exemple, cette gaine plastique étant montée sur une ossature formée par des entretoises, respectivement notées 120, 121 et 130, 131, rendues solidaires par des élingues ou câbles semi-rigides 14, chaque couple d'entretoises tel que 120, 121, 131, 130 étant destiné à former un logement dans lequel peuvent être montés respectivement les moyens de réception 2 et les moyens d'émission 3.

Sur les figures 7a et 7b, on a représenté l'axe longitudinal de l'outil en trait discontinu, cet axe étant noté $\Delta'$. La gaine 10 est, bien entendu, constituée par une gaine étanche, l'intérieur de la gaine 10 étant rempli d'une huile au silicone par exemple dans laquelle baigne l'ensemble de l'appareillage constitué par les moyens d'émission 3 et les moyens de réception 2.

Bien entendu, l'outil 1 comporte, à l'une de ses extrémités, un système d'arrimage 15 à un train de tige ou à un câble par exemple. de façon à permettre l'introduction et le déplacement de l'outil 1 dans le puits PU.

On comprendra, bien entendu, que dans le mode de réalisation de la figure 7b, dans lequel la gaine 10 a été représentée en coupe afin d'assurer la représentation de l'infrastructure constituée par les entretoises et les élingues, l'hydrophone, assurant une détection omnidirectionnelle pour les moyens de détection 2 bidirectionnelle, peut alors avantageusement être placé dans le logement constitué par les entretoises 120 et 121 sensiblement sur l'axe longitudinal $\Delta'$ de l'outil. Bien entendu, la gaine 10 est alors constituée par un matériau plastique suffisamment souple. afin de transmetttre les vibrations ou ondes de pression d'échos R et R', elles-mêmes transmises, d'une part, par la boue environnant l'outil 1 dans le puits et par l'huile remplissant la gaine elle-même.

En outre, dans le logement précité, formé par les entretoises 120 et 121, les moyens de détection bidirectionnelle 2 comportent par exemple un géophone bidirectionnel, par exemple un géophone de type différentiel, comportant deux éléments transducteurs de vibrations disposés orthogonalement dans un plan orthogonal à l'axe $\Delta'$ longitudinal de l'outil 1. Ces deux éléments transducteurs sont représentés sur la figure 7c et notés respectivement 21 et 22. Ces deux éléments transducteurs de vibrations, dont les axes longitudinaux de symétrie sont respectivement notés $\delta 1$ et $\delta 2$, sont destinés en fonctionnement à être couplés mécaniquement aux parois du puits PU par l'intermédiaire de la gaine souple 10. On comprendra, bien entendu, que, quelle que soit l'orientation en rotation de l'outil 1 par rapport à son axe longitudinal $\Delta'$ lorsque l'outil précité est dans le puits PU, cette orientation étant a priori quelconque lorsque l'outil est dans le puits, chaque transducteur 21, 22 permet ainsi d'assurer une détection de la composante correspondante de l'écho ou onde de pression réfléchie située dans le plan longitudinal de symétrie du puits PU.

Sur la figure 7c, on a représenté à la partie droite supérieure de celle-ci une vue de face des transducteurs 21 et 22, c'est-à-dire une vue dans la direction de l'axe longitudinal $\Delta'$, le plan de symétrie longitudinale du puits P ayant a priori une orientation quelconque par rapport au transducteur précité.

Les moyens de détection bidirectionnelle 2 peuvent, de manière semblable, comporter un ensemble de deux hydrophones dipolaires dont les axes sont perpendiculaires entre eux et à l'axe $\Delta'$ de l'outil, ainsi que représenté en figure 7d.

Sur la figure 7d, on a représenté les hydrophones dipolaires par des anneaux transducteurs 210 et 220 dont les axes respectifs $\delta'1$ et $\delta'2$ sont orthogonaux entre eux et à l'axe longitudinal $\Delta'$ de l'outil.

Bien entendu, le géophone bidirectionnel représenté en liaison avec la figure 7c ou les hydrophones dipolaires représentés en liaison avec la figures 7d peuvent être constitués par des composants directement disponibles dans le commerce et, à ce titre, ne seront pas décrits en détail.

Afin d'assurer un outil 1 totalement autonome, d'une part, la source impulsive et le générateur de vibrations constituant les moyens d'émission 3 et, d'autre part, les hydrophones dipolaires et le géophone bidirectionnel sont disposés au voisinage l'un de l'autre respectivement dans le cas du mode de réalisation de la figure 7b dans le logement 13 constitué entre les entretoises 131 et 130 et dans le logement 12 constitué entre les entretoises 120 et 121.

Un mode de réalisation avantageux non limitatif de moyens d'émission omnidirectionnelle et/ou bidirectionnelle sera décrit en liaison avec la figure 7e.

Sur la figure précitée, on a représenté un arrangement de sources de vibrations par exemple, ces sources de vibrations 320 à 327 étant disposées entre deux entretoises 30 et 31 selon un arrangement sensiblement cylindrique. Ainsi qu'on l'a représenté en partie droite de la figure 7e, deux sources de vibrations, telles que 320 et 324 par exemple sont opposées diamétralement, chaque source de vibrations étant par exemple munie d'un bras de couplage non représenté lequel est destiné à être appliqué par l'intermédiaire de la gaine 10 sur la paroi du puits, ce bras de couplage étant destiné à assurer la transmission des vibrations émises par chaque élément 320 à 327. Chaque élément constitué par une source de vibrations et désigné par 320 à 327 peut être constitué par une source normalement disponible dans le commerce et distribuée par la Société SERCEL. Ce type de source ne sera pas décrit en détail pour la raison précitée.

De manière avantageuse non limitative, les sources 320 à 327 peuvent être excitées en phase, ces sources présentant des caractéristiques d'émission identiques et pouvant alors constituer, en raison de leur arrangement symétrique, une source ou moyens d'émission omnidirectionnelle.

Le mode de réalisation de la figure 7e permet également de constituer une source d'émission bidirectionnelle. Dans ce but, il suffit d'exciter deux des éléments diamétralement opposés, tels que les éléments 300 et 324 ou 321 et 325 par exemple. Bien entendu, et afin de s'affranchir de l'orientation relative en rotation des moyens d'émission représentés en figure 7e par rapport à l'axe longitudinal $\Delta'$ de l'outil, il est possible d'effectuer une émission séquentielle de deux éléments diamétralement opposés, tels que 320 et 324, 321 et 325, l'émission séquentielle pouvant être poursuivie pour l'ensemble des couples diamétralement opposés et l'émission bidirectionnelle finalement retenue pouvant l'être par exemple sur critère de maximum de réception, c'est-à-dire maximum d'amplitude des signaux d'échos reçus par les moyens de réception 2.

Bien entendu, l'ensemble constitué par les éléments diamétralement opposés montés dans les entretoises 30 et 31 peut être installé dans le logement 13 entre les entretoises 130 et 131, tel que précédemment décrit sur la figure 7b.

Afin d'assurer un outil adaptatif permettant d'optimaliser la mise en oeuvre du procédé, objet de l'invention, en fonction des conditions de situation et de nature des couches géologiques environnantes du puits de forage, l'outil 1 peut comporter, ainsi que représenté en figure S, une pluralité de moyens d'émission, tel que décrit en figure 7e par exemple, ces moyens d'émission 300, 301, 302 sur la figure 8 précitée étant espacés d'un pas 1 dans la direction longitudinale de l'outil, direction parallèle à l'axe de symétrie $\Delta'$.

En outre, ainsi que représenté sur cette même figure, l'outil 1 peut comporter une pluralité de moyens de détection bidirectionnelle, ces moyens 200, 201, 202 étant installés dans des logements analogues au logement 12 et espacés d'un pas L dans la direction longitudinale de l'outil 1, direction parallèle à l'axe de symétrie $\Delta'$.

Bien entendu, chaque moyen de détection 200, 201, 202 peut alors comporter des éléments transducteurs 21 et 22 ou 210, 220, tel que représenté en figure 7c ou en figure 7d. En outre, un hydrophone omnidirectionnel est prévu au niveau de chacun des moyens de détection bidirectionnelle 200, 201, 202. On comprendra, bien sûr, que l'ensemble des moyens d'émission et des moyens de détection 300, 301, 302, 200, 201, 202 peut être activé sélectivement pour obtenir une distance de décalage dx des moyens de réception par rapport aux moyens d'émission ajustable au choix de l'utilisateur en fonction des conditions d'utilisation.

Dans un mode de réalisation, l'outil 1 comportait quatre moyens d'émission, tels que 300, 301, 302 sur la figure 8 et une pluralité de moyens de détection, tels que 200, 201, 202, la distance de décalage dx pouvant être ajustée, une valeur minimum de 1 mètre à plusieurs dizaines de mètres par pas de 25 cm ou par multiple de 25 cm.

On a ainsi décrit un procédé et un dispositif d'acquisition de données sismiques de puits particulièrement avantageux dans la mesure où, en raison de la discrimination des directions opposées des échos ou ondes de pression réfléchies mis en oeuvre, conformément à l'objet de la présente invention, les différents horizons peuvent ainsi être déterminés de part et d'autre du puits dans deux directions opposées, un tel mode opératoire apparaissant particulièrement intéressant dans le cas de puits horizontal pour la détermination des horizons supérieurs et inférieurs par rapport au puits PU, ainsi que représenté en figure 6.

On rappelle que par horizons dans le domaine technique considéré, on entend toutes couches géologiques matérialisées ou non susceptibles de constituer pour des ondes de pression un réflecteur.

## Revendications

1. un procédé d'acquisition de données sismiques de puits, selon deux directions opposées, dans un puits de forage parallèle ou pseudo-parallèle aux couches géologiques environnantes, ledit procédé consistant :
   . à effectuer dans ledit puits, en un point de celui-ci, l'émission (E) d'une onde de pression (R, R'),
   . à effectuer en un point de détection dudit puits, décalé par rapport au point d'émission (E) de l'onde de pression, une détection des échos réfléchis et réfractés par les formations géologiques adjacentes, caractérisé en ce que l'onde de pression émise est omnidirectionnelle et/ou bidirectionnelle et en ce que la détection est effectuée à partir d'au moins une réception bidirectionnelle et/ou omnidirectionnelle de façon à discriminer les ondes de pression réfléchies et réfractées par lesdites formations géologiques dans un plan de symétrie longitudinale dudit puits, ladite discrimination étant effectuée à partir d'une détection de la somme (R+R') et d'une fonction de la différence k(R-R') des signaux d'échos provenant desdites directions opposées. reçus audit point de détection.

2. Procédé selon la revendication 1, caractérisé en ce que ladite émission dans le puits étant omnidirectionnelle, ladite détection consiste à effectuer une réception omnidirectionnelle et une réception bidirectionnelle des échos ou ondes de pression réfléchies et réfractées, les deux directions de la réception bidirectionnelle définissant un plan orthogonal au plan de symétrie longitudinale dudit puits.

3. Procédé selon la revendication 1, caractérisé en ce que ladite émission dans le puits étant bidirectionnelle, ladite détection consiste à effectuer une réception omnidirectionnelle et une réception bidirectionnelle des échos ou ondes de pression réfléchies et réfractées, les deux directions de ladite émission et de ladite réception bidirectionnelle étant respectivement contenues dans un plan orthogonal audit plan de symétrie longitudinale dudit puits.

4. Procédé selon la revendication 1, caractérisé en ce que ladite émission dans le puits étant omnidirectionnelle et bidirectionnelle, ladite détection consiste à effectuer une réception omnidirectionnelle, les deux directions de ladite émission bidirectionnelle définissant un plan orthogonal audit plan de symétrie longitudinale du puits.

5. Procédé selon la revendication 1, caractérisé en ce que ladite émission dans le puits étant bidirectionnelle et omnidirectionnelle ladite détection consiste à effectuer une réception bidirectionnelle, les deux directions de ladite émission et de ladite réception bidirectionnelles étant contenues respectivement dans un plan orthogonal audit plan de symétrie longitudinale dudit puits.

6. Procédé selon l'une des revendications précédentes, caractérisé en ce que ledit puits étant parallèle ou pseudo-parallèle aux couches géologiques environnantes, ledit plan de symétrie longitudinale du puits est sensiblement perpendiculaire auxdites couches.

7. Procédé selon l'une des revendications 2 à 6, caractérisé en ce que lesdites émission ou réception omnidirectionnelle et bidirectionnelle sont effectuées dans cet ordre ou réciproquement.

8. Procédé selon l'une des revendications précédentes, caractérisé en ce que ladite détection est effectuée à partir desdites réceptions omnidirectionnelle et bidirectionnelle, ladite réception omnidirectionnelle permettant pour une émission omnidirectionnelle d'obtenir un signal représentatif d'échos proportionnel à la somme des pressions (R + R') des ondes de pression réfléchies et réfractées, dans ledit plan de symétrie longitudinale du puits, ladite réception bidirectionnelle permettant d'obtenir un signal représentatif de la différence des gradients des pressions $\frac{\partial R}{\partial x}$ et $\frac{\partial R'}{\partial x}$ dans cette direction des ondes de pression réfléchies ou réfractées dans ledit plan de symétrie longitudinale du puits.

9. Procédé selon l'une des revendications 1 à 7 précédentes, caractérisé en ce que ladite détection est effectuée à partir desdites réceptions omnidirectionnelle et bidirectionnelle, ladite réception bidirectionnelle permettant pour une émission bidirectionnelle d'obtenir un signal représentatif d'échos proportionnel à la somme des pression (R+R') des ondes de pression réfléchies et réfractées, dans ledit plan de symétrie longitudinale du puits, ladite réception bidirectionnelle permettant d'obtenir un signal représentatif de la différence des gradients des pressions $\frac{(\partial R}{\partial x}$ et $\frac{\partial R')}{\partial x}$ dans cette direction des ondes de pression réfléchies et réfractées dans ledit plan de symétrie longitudinale du puits.

10. Dispositif d'acquisition de données sismiques de puits. selon deux directions opposées, dans un puits parallèle ou pseudo-parallèle aux couches géologiques environnantes, caractérisé en ce qu'il comprend un outil (1) d'acquisition comportant
   - des moyens (3) d'émission d'une onde de pression, omnidirectionnelle et/ou bidirectionnelle,
   - des moyens de détection bidirectionnelle des échos réfléchis et réfractés par les formations géologiques adjacentes, disposés en décalage par rapport aux moyens d'émission, de façon à discriminer les ondes de pression réfléchies et réfractées par lesdites formations géologiques dans un plan de symétrie longitudinale dudit puits, la discrimination étant effectuée à partir d'une détection de la somme et de la différence des signaux d'écho provenant desdites directions opposées.

11. Dispositif selon la revendication 10, caractérisé en ce que lesdits moyens d'émission (3) sont constitués par une source impulsive.

12. Dispositif selon la revendication 10 ou 11, caractérisé en ce que lesdits moyens d'émission (3) sont constitués par une source générateur de vibrations.

13. Dispositif selon l'une des revendications 10 à 12, caractérisé en ce que lesdits moyens (2) de détection bidirectionnelle comportent un hydrophone disposé dans le milieu ambiant du puits constitué par de la boue.

14. Dispositif selon l'une des revendications 10 à 13, caractérisé en ce que lesdits moyens de détection bidirectionnelle comportent soit un géophone bidirectionnel, ledit géophone comportant deux éléments transducteurs de vibrations disposés orthogonalement dans un plan orthogonal à l'axe longitudinal de l'outil, les deux éléments transducteurs de vibrations étant destinés, en fonctionnement, à être couplés mécaniquement aux parois du puits, soit un ensemble de deux hydrophones dipolaires dont les axes sont perpendiculaires entre eux et à l'axe de l'outil.

15. Dispositif selon la revendication 12 ou 14, caractérisé en ce que, d'une part, la source impulsive et le générateur de vibrations et, d'autre part, les hydrophones dipolaires et le géophone bidirectionnel sont disposés au voisinage l'un de l'autre.

16. Dispositif selon l'une des revendications 10 à 15. caractérisé en ce que ledit outil comporte une pluralité de moyens d'émission et de moyens de détection bidirectionnelle, lesdits moyens pouvant être activés sélectivement pour obtenir une distance de décalage des moyens de réception par rapport aux moyens d'émission ajustable au choix de l'utilisateur.

**Patentansprüche**

1. Verfahren zur Erfassung von seismischen Bohrlochdaten in zwei entgegengesetzten Richtungen in einem Bohrloch, welches parallel oder pseudoparallel zu den umliegenden geologischen Schichten ist, wobei das Verfahren in folgenden Schritten besteht:
   Aussendung (E) einer Druckwelle (R, R') in dem Bohrloch an einem Punkt desselben und
   Erfassung der von den benachbarten geologischen Schichten reflektierten und gebrochenen Echos an einem Erfassungspunkt des Bohrloches, der gegenüber dem Aussendungspunkt (E) der Druckwelle versetzt ist, dadurch gekennzeichnet, daß die ausgesandte Druckwelle allseitig und/oder zweiseitig gerichtet ist und daß die Erfassung auf der Grundlage von mindestens einem zweiseitigen und/oder allseitigen Empfang in der Weise erfolgt, daß die von den genannten geologischen Formationen reflektierten und gebrochenen Druckwellen in einer Längs-Symmetrieebene des Bohrloches unterschieden werden, wobei die Unterscheidung auf der Grundlage einer Erfassung der Summe (R+R') und einer Funktion der Differenz k(R-R') der von den genannten entgegengesetzten Richtungen kommenden, an dem Erfassungspunkt empfangenen Echosignale erfolgt.

2. Verfahren nach Anspruch 1, dadurch gekennzeichnet, daß dann, wenn die genannte Aussendung in dem Bohrloch allseitig gerichtet ist, die Erfassung darin besteht, einen allseitigen Empfang und einen zweiseitigen Empfang der Echos bzw. der reflektierten und gebrochenen Druckwellen zu bewirken, wobei die beiden Richtungen des zweiseitigen Empfangs eine zur Längs-Symmetrieebene des Bohrloches senkrechte Ebene definieren.

3. Verfahren nach Anspruch 1, dadurch gekennzeichnet, daß dann, wenn die genannte Aussendung in dem Bohrloch zweiseitig gerichtet ist, die Erfassung darin besteht, einen allseitigen Empfang und einen zweiseitigen Empfang der Echos bzw. der reflektierten und gebrochenen Druckwellen zu bewirken, wobei die beiden Richtungen der Aussendung und des genannten zweiseitigen Empfangs jeweils in einer zur Längs-Symmetrieebene des Bohrloches senkrechten Ebene enthalten sind.

4. Verfahren nach Anspruch 1, dadurch gekennzeichnet, daß dann, wenn die genannte Aussendung in dem Bohrloch allseitig und zweiseitig gerichtet ist, die genannte Erfassung darin besteht, einen allseitigen Empfang zu bewirken, wobei die beiden Richtungen der genannten zweiseitigen Aussendung eine zur Längs-Symmetrieebene des Bohrloches senkrechte Ebene definieren.

5. Verfahren nach Anspruch 1, dadurch gekennzeichnet, daß dann, wenn die genannte Aussendung in dem Bohrloch zweiseitig und allseitig gerichtet ist, die genannte Erfassung darin besteht, einen zweiseitigen Empfang zu bewirken, wobei die beiden Richtungen der zweiseitigen Aussendung und des zweiseitigen Empfangs jeweils in einer zu der Längs-Symmetrieebene des Bohrloches senkrechten Ebene enthalten sind.

6. Verfahren nach einem der vorangehenden Ansprüche, dadurch gekennzeichnet, daß dann, wenn das Bohrloch parallel oder pseudoparallel zu den umliegenden geologischen Schichten ist, die Längs-Symmetrieebene des Bohrloches annähernd senkrecht zu den genannten Schichten steht.

7. Verfahren nach einem der Ansprüche 2 bis 6, dadurch gekennzeichnet, daß die Aussendung oder der Empfang in allseitiger oder in zweiseitiger Richtung jeweils in dieser Reihenfolge oder umgekehrt vorgenommen werden.

8. Verfahren nach einem der vorangehenden Ansprüche, dadurch gekennzeichnet, daß die genannte Erfassung auf der Grundlage des allseitigen und des zweiseitigen Empfangs vorgenommen wird, wobei der allseitige Empfang es ermöglicht, für eine allseitige Aussendung ein für die Echos repräsentatives Signal, welches proportional zur Summe (R + R') der Drücke der reflektierten und gebrochenen Druckwellen ist, in der Längs-Symmetrieebene des Bohrloches zu erhalten, und wobei der zweiseitige Empfang es ermöglicht, ein für die Differenz der Druckgradienten ($\frac{\partial R}{\partial x}$ und $\frac{\partial R'}{\partial x}$) in dieser Richtung der reflektierten und gebrochenen Druckwellen in der genannten Längs-Symmetrieebene des Bohrloches zu erhalten.

9. Verfahren nach einem der vorangehenden Ansprüche 1 bis 7, dadurch gekennzeichnet, daß die Erfassung auf der Grundlage des allseitigen und des zweiseitigen Empfangs vorgenommen wird, wobei der zweiseitige Empfang es ermöglicht, für eine zweiseitige Aussendung ein für die Echos repräsentatives Signal, welches proportional zur Summe der Drücke (R + R') der reflektierten und gebrochenen Druckwellen ist, in der Längs-Symmetrieebene des Bohrloches zu erhalten, und wobei es der zweiseitige Empfang ermöglicht, ein für die Differenz der Druckaradienten ($\frac{\partial R}{\partial x}$ und $\frac{\partial R'}{\partial x}$) in dieser Richtung der reflektierten und gebrochenen Druckwellen in der Längs-Symmetrieebene des Bohrloches zu erhalten.

10. Vorrichtung zur Erfassung von seismischen Bohrlochdaten in zwei entgegengesetzten Richtungen in einem zu den umliegenden geologischen Schichten parallelen oder pseudoparallelen Bohrloch, dadurch gekennzeichnet, daß sie ein Empfangsgerät (1) aufweist, welches umfaßt:
   - Mittel (3) zur Aussendung einer allseitig und/oder zweiseitig gerichteten Druckwelle und
   - Mittel zur zweiseitig gerichteten Erfassung der von den benachbarten geologischen Formationen reflektierten und gebrochenen Echos, wobei diese Mittel gegenüber den Mitteln zur Aussendung versetzt angeordnet sind, derart, daß sie die von den genannten geologischen Formationen reflektierten und gebrochenen Druckwellen in einer Längs-Symmetrieebene des Bohrloches unterscheiden, wobei die Unterscheidung auf der Grundlage einer Erfassung der Summe und der Differenz der von den genannten entgegengesetzten Richtungen kommenden Echosignale durchgeführt wird.

11. Vorrichtung nach Anspruch 10, dadurch gekennzeichnet, daß die genannten Mittel zur Aussendung (3) durch eine Impulsquelle gebildet sind.

12. Vorrichtung nach Anspruch 10 oder 11, dadurch gekennzeichnet, daß die genannten Mittel zur Aussendung (3) durch eine Schwingungserzeugungsquelle gebildet sind.

13. Vorrichtung nach einem der Ansprüche 10 bis 12, dadurch gekennzeichnet, daß die genannten Mittel (2) zur zweiseitigen Erfassung ein Hydrophon umfassen, welches in dem das Bohrloch umgebenden, durch Schlamm gebildeten Medium angeordnet ist.

14. Vorrichtung nach einem der Ansprüche 10 bis 13, dadurch gekennzeichnet, daß die genannten Mittel zur zweiseitigen Erfassung entweder ein zweiseitig gerichtetes Geophon umfassen, wobei das Geophon zwei rechtwinkelig in einer zur Längsachse des Gerätes rechtwinkeligen Ebene angeordnete Schwingungswandlerelemente enthält, die dazu bestimmt sind, im Betrieb mechanisch mit den Bohrlochwänden gekoppelt zu werden, oder daß diese Mittel zur zweiseitigen Erfassung eine Anordnung von zwei bipolaren Hydrophonen umfassen, deren Achsen senkrecht zueinander und zur Achse des Gerätes stehen.

15. Vorrichtung nach Anspruch 12 oder 14, dadurch gekennzeichnet, daß die Impulsquelle und der Schwingungserzeuger einerseits und die bipolaren Hydrophone und das zweiseitig gerichtete Geophon andererseits zueinander benachbart angeordnet sind.

16. Vorrichtung nach einem der Ansprüche 10 bis 15, dadurch gekennzeichnet, daß das Gerät eine Mehrzahl von Aussendungsmitteln und von Mitteln zur Erfassung in zwei Richtungen umfaßt, wobei diese Mittel wahlweise aktiviert werden können, um einen einstellbaren Versatzabstand der Empfangsmittel gegenüber den Aussendungsmitteln nach Wahl des Benutzers zu erhalten.

## Claims

1. A method of acquiring borehole seismic data in two opposite directions in a borehole, which is parallel or quasi-parallel to surrounding geological strata, the method consisting in:
   emitting at a point (E) in said borehole a pressure wave (R, R') in said borehole; and
   at a detection point in said borehole that is offset relative to the pressure wave emission point (E), detecting echoes reflected and refracted by the adjacent geological formations, characterized in that the emitted pressure wave is omnidirectional and/or bidirectional and in that the detecting is realized from at least a bidirectional and/or omnidirectional receiving in such a manner as to discriminate between pressure waves reflected and refracted by said geological formations in a longitudinal plane of symmetry of said borehole, said discrimination being performed on the basis of detecting the sum (R + R') and a function of the difference k(R - R') of the echo signals coming from said opposite directions received at said detection point.

2. A method according to claim 1, characterized in that when said emission in said borehole is omnidirectional, said detection consists in performing omnidirectional reception and bidirectional reception of the echoes or reflected and refracted pressure waves, the two directions of bidirectional reception defining a plane orthogonal to the longitudinal plane of symmetry of said borehole.

3.  A method according to claim 1, characterized in that when said emission is bidirectional, said detection consists in performing omnidirectional reception and bidirectional reception of the echoes or reflected and refracted pressure waves, the two directions of said emission and of said bidirectional reception being respectively contained in a plane orthogonal to said longitudinal plane of symmetry of said borehole.

4.  A method according to claim 1, characterized in that when said emission in said borehole is omnidirectional and bidirectional, said detection consists in performing omnidirectional reception, the two directions of said bidirectional emission defining a plane orthogonal to said longitudinal plane of symmetry of the borehole.

5.  A method according to claim 1, characterized in that when said emission in said borehole is bidirectional and omnidirectional, said detection consists in performing bidirectional reception, the two directions of said bidirectional emission and of said bidirectional reception being respectively contained in a plane orthogonal to said longitudinal plane of symmetry of said borehole.

6.  A method according to any preceding claim, characterized in that said borehole is parallel or quasi-parallel to said surrounding geological strata, and said longitudinal plane of symmetry of the borehole is substantially perpendicular to said strata.

7.  A method according to any one of claims 2 to 6, characterized in that said omnidirectional and bidirectional emission or reception are performed in that order or in the opposite order.

8.  A method according to any preceding claim, characterized in that said detection is performed on the basis of said omnidirectional and bidirectional reception, said omnidirectional reception serving with omnidirectional emission to obtain a signal representative of echoes proportional to the sum of the pressures ($R + R'$) of the pressure waves reflected and refracted in said longitudinal plane of symmetry of the borehole, said bidirectional reception serving to obtain a signal representative of the difference between the pressure gradients ($\partial R/\partial x$ and $\partial R'/\partial x$) in said directions of the pressure waves reflected or refracted in said longitudinal plane of symmetry of the borehole.

9.  A method according to any one of preceding claims 1 to 7, characterized in that said detection is performed on the basis of said omnidirectional and bidirectional reception, said bidirectional reception in association with bidirectional emission serving to obtain a signal representative of echoes proportional to the sum of the pressures ($R + R'$) of the pressure waves reflected and refracted in said longitudinal plane of symmetry of the borehole, said bidirectional reception serving to obtain a signal representative of the difference between the pressure gradients ($\partial R/\partial x$ and $\partial R/\partial x$) in said direction of the pressure waves reflected and refracted in said longitudinal plane of symmetry of the borehole.

10. Apparatus for acquiring borehole seismic data in two opposite directions in a borehole parallel or quasi-parallel to surrounding geological strata, the apparatus being characterized in that it comprises an acquisition tool (1) including:
    emission means (3) for emitting an omnidirectional and/or a bidirectional pressure wave: and
    bidirectional detection means for detecting echoes reflected and refracted by the adjacent geological formations, the detection means being disposed at an offset from the emission means, and serving to discriminate between pressure waves reflected and refracted by said geological formations in a longitudinal plane of symmetry of said borehole, the discrimination being performed on the basis of detecting the sum and the difference of the echo signals coming from said opposite directions.

11. Apparatus according to claim 10, characterized in that said emission means (3) are constituted by a pulse source.

12. Apparatus according to claim 10 or 11, characterized in that said emission means (3) are constituted by a vibration generating source.

13. Apparatus according to any one of claims 10 to 12, characterized in that said bidirectional detection means (2) comprise a hydrophone disposed in the ambient medium of the borehole constituted by mud.

14. Apparatus according to any one of claims 10 to 13, characterized in that said bidirectional detection means comprise either a set of two dipole hydrophones whose axes are mutually perpendicular and perpendicular to the axis of the tool, or else a bidirectional geophone, said geophone comprising two vibration transducer components disposed orthogonally in a plane that is orthogonal to the longitudinal axis of the tool, the two vibration transducer components being designed to be mechanically coupled in operation with the walls of the borehole.

15. Apparatus according to claim 12 or 14, characterized in that firstly the pulse source and the vibration generator and secondly the dipole hydrophones and the bidirectional geophone are disposed close together.

16. Apparatus according to any one of claims 10 to 15, characterized in that said tool includes a plurality of emission means and of bidirectional detection means, said means being capable of being activated selectively to obtain an offset distance between the reception means and the emission means that is adjustable depending on user choice.

FIG_1a

FIG_1b

FIG_2a

FIG_2b

FIG_3a

FIG_3b

FIG_4a

FIG_4b

FIG_5a

FIG_5b

FIG_6

|  | EO | EB |
|---|---|---|
| RO | $R + R'$ | $\dfrac{\partial R}{\partial X} - \dfrac{\partial R'}{\partial X}$ |
| RB | $\dfrac{\partial R}{\partial X} - \dfrac{\partial R'}{\partial X}$ | $R + R'$ |

FIG_7a

FIG_7b

FIG_7c

FIG_7d

16

**FIG.7e**

**FIG.8**